# EUROPÄISCHE PATENTANMELDUNG

(11) **EP 2 060 593 A1**
(43) Veröffentlichungstag der Anmeldung: **20.05.2009**
(21) Anmeldenummer: 07021978.7
(22) Anmeldetag: 13.11.2007
(51) Int. Cl.: C08G 59/02, C08G 59/30, C08L 63/00, C08L 81/04, E04D 7/00

(54) **Verwendung einer Abdichtungsmasse zur Herstellung einer Wasserdampfsperrschicht**

(71) Anmelder: Nestler, Karl, 97320 Sulzfeld (DE)
(72) Erfinder: Nestler, Karl, 97320 Sulzfeld (DE)
(74) Vertreter: Walcher, Armin

(57) **Zusammenfassung**

Die Erfindung betrifft die Verwendung einer Abdichtungsmasse zur Herstellung einer Wasserdampfsperrschicht, wobei die Abdichtungsmasse umfaßt mindestens ein epoxyfunktionelles Polysulfidharz, mindestens ein Epoxydharz und mindestens einen Härter sowie Füllstoffe Hilfs- und/oder Zusatzmittel, wobei der Anteil an epoxyfunktionellem Polysulfidharz in einem Bereich von 25 bis 80 Masse-%, bezogen auf die Gesamtmasse der Abdichtungsmasse, liegt. Die Erfindung betrifft ferner eine Wasserdampfsperrschicht, einen Mehrschichtaufbau sowie ein Flächengebilde.

## Beschreibung

Die vorliegende Erfindung betrifft die Verwendung einer Abdichtungsmasse, insbesondere zur Herstellung einer Wasserdampfsperrschicht als auch eine Wasserdampfsperrschicht. Ferner betrifft die Erfindung einen Mehrschichtaufbau, der die Wasserdampfsperrschicht enthält, als auch ein Flächengebilde, das mit der Wasserdampfsperrschicht bzw. dem Mehrschichtaufbau versehen ist.

Zur Abdichtung von Gebäuden oder Gebäudeteilen, beispielsweise von Flachdächern, Terrassen, Balkonen, Parkdecks, etc., werden neben Folien auch flüssige Beschichtungsmaterialien verwendet.

Flüssige Beschichtungsmaterialien ergeben nach Aufbringung eine naht- und fugenlose Abdichtung mit gleichmäßiger Dicke. Die Abwesenheit von Nähten und Fugen ist von großem Vorteil, da an Nähten und Fugen häufig Undichtigkeiten entstehen. Beispielsweise müssen bei Verwendung von Kunststofffolien die Folien nach Aufbringung dauerhaft miteinander verklebt oder verschweißt werden. Nachteiligerweise treten jedoch an den Fugen bzw. Nähten teilweise bereits bei der Verklebung bzw. Verschweißung der Folien miteinander bzw. teilweise erst nach einer gewissen Zeit Undichtigkeiten auf.

Diese Undichtigkeiten können dann zu einer Durchfeuchtung von Gebäuden oder Gebäudeteilen führen, wodurch erhebliche Schädigungen an den Gebäuden oder Gebäudeeinrichtungen hervorgerufen werden können.

Insoweit besteht ein Bedarf an der Bereitstellung von Abdichtungsmaterialien, die zuverlässig Gebäude bzw. Gebäudeteile gegenüber Feuchtigkeit und Wasserdampf abdichten und die in der Handhabung einfach und zuverlässig sowie vorzugsweise in arbeits- und umwelttechnischer Hinsicht weitgehend unbedenklich sind.

Aus der US 5,447,798 ist ein beschichteter Gegenstand aus Beton bekannt, der eine Mischschicht aus Beton und Polysulfid-modifiziertem Epoxidharz sowie eine Schicht aus gehärtetem Polysulfid-modifiziertem Epoxidharz aufweist. Das Polysulfid-modifizierte Epoxidharz wird unter Zentrifugation auf den noch nicht ausgehärteten Betongegenstand aufgebracht, wodurch sich die gewünschte Mischschicht aus Beton und Polysulfid-modifiziertem Epoxidharz ausbildet. Nachfolgend wird auf die Mischschicht sodann eine Schicht aus Polysulfid-modifiziertem Epoxidharz aufgebracht. Das Polysulfid-modifizierte Epoxidharz wird dabei vor der Aufbringung in organischem Lösungsmittel gelöst.

Nachteilig ist bei der Vorgehensweise gemäß der Lehre der US 5,447,798, das in organischem Lösungsmittel gelöstes Polysulfid-modifiziertes Epoxidharz verwendet wird, da dies eine Belastung für Mensch und Umwelt darstellt. Weiterhin ist nachteilig, dass das Beschichtungsmittel zwingend auf einen noch nicht ausgehärteten Gegenstand aus Beton unter Zentrifugation aufgebracht werden muss, so dass sich die erforderliche Mischschicht aus Beton und Polysulfid-modifiziertem Epoxidharz ausbilden kann. Eine Beschichtung von ausgehärtetem Beton, beispielsweise eines undicht gewordenen Flachdaches, ist mithin nicht möglich, da sich in diesem Fall nicht die erforderliche Mischschicht ausbilden kann.

Aus der US 5,320,871 ist eine Beschichtungszusammensetzung bekannt, die dem Schutz von Stahlstrukturen oder ähnlichem gegenüber Korrosion dient, wenn diese unter Wasser angeordnet sind.

Aus der EP 0 693 512 A1 ist ein lösemittelfreies Zweikomponenten-Polyurethan-Beschichtungsmittel bekannt, das in flüssiger Form zur Dachabdichtung oder Betonsanierung verwendet werden kann. Es hat sich jedoch gezeigt, dass diese Polyurethan-Beschichtungsmaterialien nur unzureichende mechanische Eigenschaften, insbesondere eine unzureichende Durchstoßfestigkeit, aufweisen und mithin nur sehr eingeschränkt verwendet werden können. Gute mechanische Eigenschaften sind insbesondere bei Dachabdichtungen erwünscht, damit beispielsweise ein Flachdach nach Aufbringung der Beschichtung belastet werden kann, z.B. durch Betreten oder Aufstellen von Gartenmöbeln, wenn das Flachdach auch als Dachterrasse benutzt wird. Ferner ist nachteilig, dass die Beschichtungsmaterialien vor der Aushärtung selbst sehr feuchtigkeitsempfindlich und mithin bei der Verarbeitung insoweit sehr problematisch sind.

Aus der US 5,914,172 sind des weiteren Bitumen- und Polysulfid-haltige Beschichtungsmaterialien bekannt, die jedoch ebenfalls nur eine unzureichende Durchstoßfestigkeit aufweisen. Des weiteren ist die Verwendung von Bitumen in gesundheitstechnischer Hinsicht problematisch.

Aufgabe der Erfindung ist es, eine Wasserdampfsperrschicht bereitzustellen, die einerseits einen guten Schutz gegenüber Wasserdampf und Feuchtigkeit bietet und zum anderen in gesundheitstechnischer Hinsicht während der Aufbringung weniger bedenklich ist, als die zur Zeit auf dem Markt verwendeten Abdichtungsmaterialen. Insbesondere bei sog. Umkehrdächern und Gründächern, wo die Dampfsperrschicht gleichzeitig die Funktion der Abdichtungsschicht übernimmt, ist es wünschenswert, eine Wasserdampfsperrschicht bereitzustellen, die über verbesserte mechanische Eigenschaften, insbesondere eine verbesserte Durchstoßfestigkeit, verfügt, so dass bei mechanischer Belastung des beschichteten Gegenstandes, beispielsweise beim Betreten der Beschichtung oder bei punktförmiger Belastung, die Wasserdampfsperrschicht nicht undicht wird.

Ferner ist es erwünscht, eine Abdichtungsmasse bereitzustellen, die bei der Sanierung von Gebäudeteilen verwendet werden kann, also beispielsweise direkt auf ausgehärtetem Beton aufgebracht werden kann, ohne dass dabei eine Mischschicht aus Beton und Abdichtungsmittel erforderlich ist.

Die der Erfindung zugrundeliegende Aufgabe wird durch Verwendung einer Abdichtungsmasse zur Herstellung einer Wasserdampfsperrschicht gelöst, umfassend
A) mindestens ein epoxyfunktionelles Polysulfidharz,
B) mindestens ein Epoxydharz,
C) mindestens einen Härter, welcher bei Umgebungstemperatur reaktiv gegenüber Epoxydgruppen ist,
D) Füllstoffe, Hilfs- und/oder Zusatzmittel
wobei der Anteil an epoxyfunktionellem Polysulfid-Harz in einem Bereich von 25 - 80 Masse-%, bezogen auf die Gesamtmasse der Abdichtungsmasse, liegt.

Bevorzugte Weiterbildungen des Erfindungsgegenstandes sind in den Unteransprüchen 2 bis 13 angegeben.

Das Epoxidäquivalentgewicht des epoxyfunktionellen Polysulfidharzes liegt vorzugsweise in einem Bereich von 300 bis 3500 g/eqiv, vorzugsweise 350 bis 1500 g/eqiv, weiter bevorzugt 400 bis 1000 g/eqiv., wobei sich die Angabe auf die reinen epoxyfunktionellen Polysulfidharze bezieht, d.h. ohne den Überschuss Epoxidharz, der bei den aromatischen Typen zwangsläufig enthalten ist.

Die Viskosität des epoxyfunktionellen Polysulfidharzes bei 20°C liegt vorzugsweise in einem Bereich von 1 bis 150 Pa·s, weiter bevorzugt von 1 bis 20 Pa·s, besonders bevorzugt von 1 bis 3 Pa·s. Die Viskosität wird dabei rotationsviskosimetrisch bestimmt.

Der Schwefelgehalt des epoxyfunktionellen Polysulfidharzes liegt vorzugsweise in einem Bereich von 30 bis 50 Gew.-%, weiter bevorzugt von 35 bis 40 Gew.-%.

Das als Komponente B) zu verwendende mindestens eine Epoxidharz ist insbesondere ein nicht modifiziertes Epoxidharz.

Es hat sich überraschend herausgestellt, dass sich eine Abdichtungsmasse, die neben Epoxydharzen ein epoxyfunktionelles Polysulfid-Harz oder ein Gemisch von verschiedenen epoxyfunktionellen Polysulfid-Harzen in einem Bereich von 25 - 80 Masse-% enthält, hervorragend eignet, um eine Wasserdampfsperrschicht herzustellen. Eine unter Verwendung von epoxyfunktionellem Polysulfid-Harz hergestellte Wasserdampfsperrschicht weist überraschenderweise eine Diffusionswiderstandszahl µ von wenigstens 15000, weiter bevorzugt von wenigstens 30000 auf. Ferner kann diese Wasserdampfsperrschicht auf einfache und umweltfreundliche Weise aufgebracht werden.

Die Diffusionswiderstandszahl µ, die auch als Diffusionswiderstandsfaktor bezeichnet wird, ist eine dimensionslose Zahl, die angibt, um wie viel größer der Widerstand eines Baustoffes gegenüber diffundierendem Wasserdampf ist, verglichen mit dem Widerstand einer gleich dicken Luftschicht von gleicher Temperatur. Je höher die Diffusionswiderstandszahl µ ist, desto stärker wird die Dampfdiffusion eingeschränkt bzw. verhindert. Bei einer Dampfwiderstandszahl µ im Bereich von 50 -500 wird die Dampfdiffusion eingeschränkt. Bei µ-Werten von 500 und15000 wird sie stark eingeschränkt. Ab einem µ-Wert von 15.000 wirkt ein Material wasserdampfsperrend und ab einem µ-Wert von 100.000 ist ein Material dampfdicht. Im Baubereich wird die Effizienz einer Dampfsperre durch den Sperrwert einer Bauteilschicht S_{d} charakterisiert, der sich aus der materialspezifischen Wasserdampfdiffusionswiderstandszahl µ multipliziert mit der Dicke d (in m) des Werkstoffes errechnet. Gemäß dem Merkblatt ,Wärmeschutz bei Dach und Wand' des Zentralverbandes des Deutschen Dachdeckerhandwerks ist bei ist bei Sperrwerten S_{d} ≥ 100m ein zuverlässiger Schutz gegen Tauwasserbildung gewährleistet.

Überraschenderweise weisen die mit epoxyfunktionellen Polysulfidharzen modifizierten Epoxydharz-Polymeren eine deutlich geringere Wasserdampfdurchlässigkeit auf im Vergleich zu nicht-modifizierten Epoxidharz-Polymeren mit einem µ-Wert im Bereich von etwa 100 bis 900.

Eine Wasserdampfsperrschicht wird üblicherweise bei der Wärmedämmung von Häusern zwischen dem zu isolierenden Bauelement, beispielsweise einer Betonwand oder einer Betondecke, auf der Außenseite und unterhalb des Wärmedämmmaterials angeordnet, d.h. zwischen Bauelement und Wärmedämmmaterial. Die Wasserdampfsperrschicht verhindert mithin, dass Wasserdampf bzw. Feuchtigkeit aus dem zu dämmenden Gebäude in das Wärmedämmmaterial diffundiert und sich dort in Form von Feuchtigkeit ansammelt. Die Ansammlung von Feuchtigkeit in dem Wärmedämmmaterial führt zum einen zu einer Verminderung des Wärmeschutzes und zum anderen zu Schädlingsbefall, beispielsweise zur Verpilzung des Wärmedämmmaterials, was gesundheitliche Probleme bei den Bewohnern dieses Gebäudes verursachen kann.

Äußerst vorteilhaft kann die erfindungsgemäß zu verwendende Abdichtungsmasse direkt, d.h. ohne Anordnung einer weiteren Zwischenschicht, auf ein Flächengebilde wie ein Bauelement, das aus üblichen Materialien bestehen bzw. diese umfassen kann, aufgebracht werden. Das Bauelement kann beispielsweise Materialien enthalten, die aus der Gruppe ausgewählt werden, die aus Beton, Mauerstein, Holz, Metall, Stahl, Kunststoff, Bitumen und Mischungen davon besteht, oder aus diesen Materialien bestehen.

Gemäß einer weiteren bevorzugten Variante der Erfindung liegt der Anteil an epoxyfunktionellem Polysulfid-Harz A) bei mindestens 25 Masse-%, vorzugsweise bei 30 - 75 Masse-%, besonders bevorzugt bei 35 - 60 Masse-%, jeweils bezogen auf die Gesamtmasse der Abdichtungsmasse.

Die gemäß der vorliegenden Erfindung zu verwendende Abdichtungsmasse bildet aufgrund des hohen Anteils von epoxyfunktionellem Polysulfid-Harz A) eine zuverlässige Wasserdampfsperrschicht auf einer Vielzahl von Substraten aus, ohne dass eine Grundierung bzw. das Aufbringen eines Primers erforderlich ist. Darüber hinaus ist die erfindungsgemäße Wasserdampfsperrschicht aufgrund des hohen Anteils an epoxyfunktionellen Polysulfid-Harz(en) A) witterungsbeständig und weist ein hervorragendes elastisches Verhalten auf, so dass es auch bei Vibration oder Fugenbewegung nicht zu einer Beschädigung der aufgebrachten Wasserdampfsperrschicht kommt. Ein weiterer Vorteil ist die hohe Beständigkeit der erfindungsgemäßen Wasserdampfsperrschicht gegenüber thermischen und chemischen Beanspruchungen. Insbesondere bei Gebäudeteilen, wie Außenwänden und Dächern, die während der Sommermonate einer intensiven Sonneneinstrahlung ausgesetzt sind, ist die sehr gute thermische Beständigkeit von großem Vorteil.

Gemäß einer Weiterbildung der Erfindung können die epoxyfunktionellen Polysulfid-Harze A) rein aliphatisch, rein aromatisch oder aber sowohl aromatisch als auch aliphatisch sein. Ferner können selbstverständlich Mischungen aus verschiedenen aliphatischen epoxyfunktionellen Polysulfid-Harzen bzw. Mischungen von verschiedenen aromatischen epoxyfunktionellen Polysulfid-Harzen als auch Mischungen von aromatischen und aliphatischen epoxyfunktionellen Polysulfid-Harzen verwendet werden.

Aliphatische epoxyfunktionelle Polysulfid-Harze können durch Umsetzung von thiolfunktionellen Polysulfiden mit Epichlorhydrin hergestellt werden, wie beispielsweise in der WO 03/099908 A1 oder der WO 03/076487 A1 offenbart, deren Offenbarungsgehalt hiermit unter Bezugnahme aufgenommen wird. Des weiteren ist auf die WO 2004/099283 A1 und die WO 2006/037442 A1 zu verweisen, in denen ebenfalls die Herstellung von epoxyfunktionellen Polysulfid-Harzen beschrieben ist und deren Offenbarung hiermit ebenfalls unter Bezugnahme aufgenommen ist.

Aromatische epoxyfunktionelle Polysulfid-Harze können durch Umsetzung von thiolfunktionellen Polysulfiden mit einer überschüssigen Menge an aromatischen Epoxidharzen, die beispielsweise durch Umsetzung von Epichlorhydrin mit Bisphenol, vorzugsweise Bisphenol A und/oder Bisphenol F, erhalten werden, hergestellt werden. Derartige Epoxidharze enthalten prinzipiell nennenswerte Mengen an unmodifizierten Epoxidharzen, wobei der Anteil an unmodifiziertem Epoxidharz typischerweise bei 25 bis 60 Gew,-% bezogen auf das Gesamtgewicht epoxidfunktioneller Komponenten beträgt. Im Rahmen der vorliegenden Erfindung hat sich gezeigt, dass bei Einsatz der aromatischen epoxyfunktionellen Polysulfidharze neben einer gesteigerten Reaktivität auch eine verbesserte Frühwasserbeständigkeit sowie eine verbesserte mechanische Festigkeit der Beschichtung im Vergleich zu den aliphatischen epoxyfunktionellen Polysulfidharzen erzielt werden kann. Unter Frühwasserbeständigkeit wird verstanden, dass sich auch in Gegenwart von Wasser, beispielsweise von unmittelbar nach Aufbringung der Abdichtungsmasse auf ein Gebäudeelement auftreffenden Regen, sich eine qualitativ hochwertige Wasserdampfsperrschicht ausbildet.

Als sehr geeignet haben sich hierbei EPS 15, EPS 25, EPS 70 und/oder EPS 350 erwiesen, die bei der Firma Thioplast Chemicals GmbH & Co. KG in 07973 Greiz, Deutschland, erhältlich sind.

Als Epoxidharz-Komponente B) können aliphatische, cycloaliphatische oder aromatische Epoxidharze verwendet werden. Vorzugsweise enthalten die Epoxidharze im Durchschnitt mehr als eine Epoxidgruppe pro Molekül, vorzugsweise wenigstens zwei, drei oder vier Epoxidgruppen pro Epoxidharzmolekül.

Beispiele für geeignete Epoxidharze B) sind Glycidylether von mehrwertigen Alkoholen wie beispielsweise Butandiol, Hexandiol, Glycerin, hydriertem Diphenylolpropan, von mehrwertigen Phenolen wie z. B. von Resorcin, Diphenylolpropan, Diphenylolmethan (Bisphenol F), 2,2- Bis-(p-hydroxyphenyl) propan (Bisphenol A) oder von Phenol-Aldehyd-Kondensaten. Es können aber auch Glycidylester mehrwertiger Carbonsäuren, wie beispielsweise Hexahydrophthalsäure oder dimerisierte Fettsäure verwendet werden.

Äußerst bevorzugt werden als Komponente B) aromatische Flüssigepoxidharze, die aus Epichlorhydrin und Bisphenol A und/oder Bisphenol F hergestellt sind und ein Molekulargewicht von 150 bis 450 g/mol aufweisen, verwendet.

Falls die Viskosität der erfindungsgemäß zu verwendenden Abdichtungsmasse abgesenkt werden soll, kann die Komponente B) monofunktionelle Epoxidverbindungen enthalten, wodurch die Verarbeitbarkeit der Abdichtungsmasse verbessert wird. Beispielsweise können aliphatische und/oder aromatische Glycidylether, wie beispielsweise Butylglycidylether, Phenylglycidylether oder Glycidylester, beispielsweise Monocarbonsäureglycidylester, verwendet werden. Selbstverständlich können auch andere Epoxide, wie beispielsweise Styroloxid (Phenylethylenoxid) oder 1,2-Epoxidodecan verwendet werden.

Als besonders geeignet haben sich als Epoxidharzkomponente B) Mischungen von Flüssigepoxydharzen auf Basis von Bisphenol A und/oder Bisphenol F mit aliphatischen Glycidyletherverbindungen erwiesen.

Insbesondere bei Einsatz von aliphatischen epoxyfunktionellen Polysulfid-Harzen als Komponente A) ist es erfindungsgemäß bevorzugt, diese aliphatischen epoxyfunktionellen Polysulfid-Harze A) in Kombination mit aromatischen Epoxidharzen als Komponente B) zu verwenden.

Im Rahmen der vorliegenden Erfindung wurde die Beobachtung gemacht, dass nur bei einem entsprechend großen Anteil an Komponente A) in der Beschichtungsmasse Beschichtungen mit hinreichend geringer Wasserdampfdurchlässigkeit resultieren. Deshalb ist es erfindungswesentlich, dass der Anteil an der Komponente A) in der Beschichtungsmasse mindestens 25 Gew.-%, bezogen auf das Gesamtgewicht der Beschichtungsmasse beträgt, vorzugsweise von 30 - 75 Gew.-%, besonders bevorzugt von 35 - 60 Gew.-%.

Der Anteil an der Komponente B) in der Beschichtungsmasse beträgt maximal 30 Gew.-% bezogen auf das Gesamtgewicht der Beschichtungsmasse, vorzugsweise von 5 - 25 Gew.-%, besonders bevorzugt von 10 - 20 Gew.-%.

Erfindungsgemäß enthält die zu verwendende Abdichtungsmasse wenigstens einen Härter als Komponente C). Die in dem erfindungsgemäß zu verwendenden Beschichtungsmassen als Komponente C) vorzugsweise einzusetzenden Härtergemische sind aromatische oder aliphatische Polyamine, die mindestens zwei primäre Aminogruppen pro Molekül aufweisen und vorzugsweise ein (mittleres) Molekulargewichts Mₙ von 60 bis 500 besitzen. Geeignet sind insbesondere aliphatische Amine wie beispielsweise Ethylendiamin, 1,2- und 1,3- Diaminopropan, 1,4-Diaminobutan, 1,6-Diaminohexan, 2,2,4- und/oder 2,4,4-Trimethylhexamethylendiamin, die isomeren Xylylendiamine oder auch solche Polyamine, die neben mindestens zwei primären Aminogruppen noch sekundäre Aminogruppen aufweisen wie beispielsweise Diethylentriamin oder Triethylentetramin.

Besonders bevorzugt werden cycloaliphatische oder araliphatische Diamine, des genannten Molekulargewichtsbereichs eingesetzt, die einen oder mehrere cycloaliphatische oder aromatische Ringe aufweisen. Hierzu gehören beispielsweise meta-Xylylendiamin, 1,4-Diaminocyclohexan, 4,4'-Diaminodicyclo-hexylmethan, 1,3 - Diaminocyclopentan, 4,4'-Diaminodicyclohexylsulfon, 4,4'- Diamino-dicyclohexyl-propan-1.3, 4,4'-Diamino-dicyclohexyl-propan-2,2, 3,3'-Dimethyl-4,4'diaminodicyclohexylmethan, 3-Aminomethyl-3,3, 5-trimethylcyclohexylamin (Isophorondiamin) oder technisches Bis-aminomethyl-tricyclodecan.
Ebenfalls einsetzbar als Komponente C) sind Addukte, die durch Umsetzung eines Überschusses der genannten Polyamine mit Epoxydharzen der vorstehend genannten Art hergestellt werden.

Weiterhin einsetzbar als Komponente C) sind Polyetheramine, die durch Umsetzung von Polyetherpolyolen mit Ammoniak hergestellt werden und beispielsweise von der Fa. Huntsman LLC, Belgien unter dem Handelsnamen Jeffamin^{®} vertrieben werden. Selbstverständlich ist es auch möglich Gemische der genannten Polyamine als Komponente C) einzusetzen.

Der Anteil an der Komponente C) in der Beschichtungsmasse wird im Allgemeinen so bemessen, dass pro Epoxidgruppe der Komponenten A) und B) 0,4 bis 0,9, vorzugsweise 0,5 bis 0,8 primäre Aminogruppen der Komponente C) in der Beschichtungsmasse enthalten sind.

Der Fachmann kann die Menge an zuzusetzendem Härter bzw. Härtergemisch in Abhängigkeit von den äußeren Reaktionsbedingungen, wie beispielsweise Umgebungstemperatur, oder der gewünschten Aushärtungszeit einstellen und durch einige Versuche selbst ermitteln.

In den erfindungsgemäß zu verwendenden Beschichtungsmassen werden als Komponente D) die aus der Beschichtungstechnologie prinzipiell bekannten Füllstoffe, Hilfs- und/oder Zusatzmittel eingesetzt.

Als geeignete Füllstoffe seien beispielsweise Gesteinsmehl, Kaolin, Talkum oder Schwerspat genannt. Bevorzugt einzusetzen sind insbesondere plättchenförmige Füllstoffe wie Schichtsilikate, Magnesiumhydroxid oder Talkum. Als Zusatzmittel seine genannt: Mattierungsmittel wie Kieselsäure, Flammschutzmittel wie insbesondere Aluminiumhydroxid, Pigmente wie beispielsweise Titandioxid, Eisenoxid Kreide oder Ruß, Viskositätsregulatoren wie beispielsweise Benzylalkohol oder Ethanol sowie Weichmacher wie Kohlenwasserstoffharze oder Phthalsäureester, wobei deren Mitverwendung keineswegs bevorzugt ist. Als weiteres Zusatzmittel sei Gummimehl genannt, bevorzugt Gummimehl auf Basis von Butylkautschuk.

Als weitere Hilfsmittel seien insbesondere Haftvermittler, wie beispielsweise funktionelle Silane, Entlüftungsmittel und Verlaufshilfsmittel sowie Reaktionsbeschleuniger wie z.B. Salicylsäure, Bis-(dimethylamino methyl)-phenol oder Tris-(dimethylaminomethyl)-phenol genannt.

Zur Erzielung spezieller Eigenschafen kann die Komponente D) flüssige Polysulfidpolymere mit Thiol-Endgruppen sowie gegebenenfalls Katalysatoren, der aus der Polysulfidchemie bekannten Art, wie beispielsweise Mangan (IV)-Oxid oder Peroxidkatalysatoren wie z.B. Calciumperoxid, Cumolhydroperoxid oder Natriumperborat enthalten. Im Rahmen der vorliegenden Erfindung wurde die Beobachtung gemacht, dass der Zusatz derartiger thiolfunktioneller Polysulfidpolymere die Wasserdampfdurchlässigkeit zusätzlich verbessert.

Der Anteil an der Komponente D) in der Beschichtungsmasse kann bis zu 60 Gew.-% bezogen auf das Gesamtgewicht der Beschichtungsmasse betragen, vorzugsweise von 10 bis 50 Gew.-%.
Der genaue Anteil sowie die genaue Art an zuzusetzenden Füllstoffen bzw. Additiven kann in Abhängigkeit von der speziellen Anwendung eingestellt werden.

Gemäß einer Weiterbildung der Erfindung enthält die Abdichtungsmasse weniger als 10 Masse-%, vorzugsweise weniger als 5 Masse-%, weiter bevorzugt weniger als 1 Masse-%, organisches Lösungsmittel, jeweils bezogen auf die Gesamtmasse der Abdichtungsmasse. Gemäß einer äußerst bevorzugten Weiterbildung der Erfindung ist die erfindungsgemäß zu verwendende Abdichtungsmasse lösemittelfrei.

Vorteilhafterweise sind die verwendeten epoxyfunktionellen Polysulfidharze A) sowie verwendendeten Epoxidharze B) so niedrigviskos, dass der Zusatz von organischem Lösungsmittel nicht erforderlich ist. Dies ist in gesundheitlicher sowie anwendungstechnischer und arbeitssicherheitstechnischer Hinsicht ein großer Fortschritt, da sowohl Mensch als auch Umwelt weniger stark belastet werden als dies bei Lösemittel-haltigen Beschichtungszusammensetzungen der Fall ist.

Gemäß einer bevorzugten Variante der Erfindung ist die Abdichtungsmasse in einem Temperaturenbereich von 10 bis 30°C, weiter bevorzugt von 5 bis 40°C, gießfähig oder fließfähig und besitzt selbstverlaufende Eigenschaften. Die erfindungsgemäß zu verwendende Abdichtungsmasse kann mithin sowohl bei kälteren Außentemperaturen als auch bei höheren Sommertemperaturen, auch im Außenbereich, sehr gut verarbeitet bzw. verwendet werden.

Gemäß einer weiteren Ausbildungsform der vorliegenden Erfindung weist die Abdichtungsmasse bei einer Temperatur von 23°C eine Viskosität im Bereich von 2.000 mPa·s bis 25.000 mPa·s, vorzugsweise von 3.000 mPa·s bis 20.000 mPa·s, weiter vorzugsweise von 5.000 mPa·s bis 15.000 mPa·s, auf, wobei die Viskosität rotationsviskosimetrisch bestimmt wird.

Bei Aufbringung der Abdichtungsmasse auf einem Flachdach, das auch eine leichte Neigung von 10 bis 20° haben kann, wie dies beispielsweise bei Dächern von Pultdachhäusern der Fall ist, wird die Viskosität eher im unteren Bereich eingestellt, so dass die Abdichtungsmasse beispielsweise auf dem Flachdach oder Pultdach durch Spritzen, Streichen, Rollen oder Rakeln aufgebracht und verteilt werden kann.

Wenn die Neigung der zu beschichtenden Fläche stärker wird, kann der Anteil an Füllstoffen oder viskositätserhöhenden Additiven erhöht werden, so dass die Abdichtungsmasse insgesamt eine höhere Viskosität aufweist und dadurch in einem etwas geringeren Maße fließfähig ist. Diese Abdichtungsmasse kann gleichwohl noch durch Streichen, Rollen, Rakeln oder Spachteln aufgebracht werden. Wenn die Abdichtungsmasse beispielsweise an einer Außenwand aufgebracht wird, ist es zweckmäßig, dass die Abdichtungsmasse beispielsweise ein Thixotropiemittel enthält, so dass die thixotrope Abdichtungsmasse durch Streichen, Rollen, Rakeln oder Spachteln aufgebracht werden kann, ohne danach von der Wand abzufließen.

Äußerst bevorzugt weist die erfindungsgemäß zu verwendende Abdichtungsmasse Verarbeitungszeiten von 30 Minuten bis zu zwei Stunden auf.

Die erfindungsgemäß zu verwendende Abdichtungsmasse kann durch Vermengen der verschiedenen Komponenten in den jeweils angegebenen Anteilen hergestellt werden. Die Formulierung der Beschichtungsmassen für die erfindungsgemäße Verwendung erfolgt typischerweise so, dass gebrauchsfertige 2-Komponentensysteme entstehen. Dazu werden typischerweise die Komponenten A) und B) in einem geeigneten Mischaggregat, vorzugsweise einem Dissolver, vorgelegt und mit verschiedenen Bestandteilen der Komponente D) innig vermischt. Der Zusatz der Komponente C) erfolgt unmittelbar vor der Verarbeitung, wobei die Komponente C) der Mischung der Komponenten A), B) und D) zugemischt wird. Gegebenfalls können Bestandteile der Komponente D) auch der Komponente C) beigemischt werden. In den Beschichtungsmassen für die erfindungsgemäße Verwendung liegen im allgemeinen pro Epoxidgruppe der Komponenten A) und B) 0,4 bis 0,9, vorzugsweise 0,5 bis 0,8 primäre Aminogruppen der Komponente C) vor.

Die so zubereitete Abdichtungsmasse kann dann einschichtig oder vorzugsweise mehrschichtig auf das zu beschichtende Substrat aufgebracht werden. Das zu beschichtende Substrat kann jedes gegenüber Wasserdampf und Feuchtigkeit zu schützende Substrat sein. Üblicherweise handelt es sich bei dem Substrat um ein Dach oder eine Wandung, die Holz, Beton, Stahl, Kunststoff, Bitumen, etc. enthalten kann.

Es hat sich als äußerst vorteilhaft herausgestellt, dass die erfindungsgemäß zu verwendende Abdichtungsmasse überraschenderweise eine sehr gute Haftung zu den Substraten, beispielsweise Beton, einerseits und zu sich selbst andererseits aufweist. Somit ist eine Grundierung des Substrates, beispielsweise Beton, vor dem Auftrag der erfindungsgemäß zu verwendenden Abdichtungsmasse nicht notwendig. Die erfindungsgemäß zu verwendende Abdichtungsmasse kann (ohne Zentrifugation) sogar auf frischen hoch-alkalischen Beton bzw. auf restfeuchten Beton aufgebracht werden. Aufgrund des hohen spezifischen Gewichts weist die erfindungsgemäß zu verwendende Abdichtungsmasse ein hohes Penetrationsvermögen auf und dichtet unter eventuell vorhandenen Wasserlagen das Substrat, beispielsweise den Beton, ab.

Wie bereits vorstehend ausgeführt, weist die erfindungsgemäß zu verwendende Abdichtungsmasse auch eine gute Haftung zu sich selbst auf. Mithin ist es möglich, mehrere Schichten der erfindungsgemäß zu verwendenden Abdichtungsmasse übereinander aufzubringen, wobei zwischen den verschiedenen Aufbringungsvorgängen die jeweils zuvor aufgebrachte Abdichtungsmasse bereits gehärtet oder ausgehärtet sein kann.

Diese Eigenschaft ist von großem Vorteil, da bei großen Substraten, beispielsweise Gebäudewänden oder Dachflächen, die Beschichtung ggf. nicht in einem Zuge aufgebracht werden kann, sondern über mehrere Tage verteilt aufgebracht werden muss. Dies stellt aufgrund der guten Haftung der erfindungsgemäß zu verwendenden Abdichtungsmasse zu sich selbst kein Problem dar, so dass auch in den Anschlussbereichen eine lückenlose Abdichtung erfolgt, wobei die nachfolgend aufgetragene Abdichtungsmasse zum einen zuverlässig an den Untergrund, beispielsweise Beton, als auch an die bereits aufgebrachte und ausgehärtete Abdichtungsmasse anhaftet und aushärtet.

Weiterhin ist vorteilhaft, dass nach Aufbringung der erfindungsgemäßen Abdichtungsmasse auch Fehlstellen und Rauhigkeiten im Untergrund nivelliert werden, so dass eine nachfolgend aufzubringende Wärmedämmung vollflächig verklebt werden kann.

Die erfindungsgemäß zu verwendende Abdichtungsmasse ermöglicht mithin eine zuverlässige Abdichtung des Untergrundes gegenüber Wasserdampf und Feuchtigkeit.

Im Hinblick auf die große Wasserdampf-Diffusionswiderstandszahl µ der erfindungsgemäß zu verwendenden Abdichtungsmasse reichen bereits sehr geringe Schichtdicken aus, um eine zuverlässig wirkende Wasserdampf-Sperrschicht zu erzeugen.

So ist eine Schichtdicke in einem Bereich von 1 bis 5 mm vorzugsweise von 2 bis 4 mm, weiter bevorzugt von 2,5 bis 3 mm, ausreichend, um eine zuverlässige wasserdampfsperrende Wirkung zu erzeugen.

Die der Erfindung zugrunde liegende Aufgabe wird mithin auch durch eine Wasserdampf-Sperrschicht gelöst, wobei die Dicke der Wasserdampf-Sperrschicht in einem Bereich von 1 bis 5 mm, vorzugsweise von 2 bis 4 mm, weiter bevorzugt von 2,5 bis 3 mm, liegt und mindestens ein gehärtetes epoxyfunktionelles Polysulfidharz in einem Bereich von 25 bis 80 Masse-%, bezogen auf die Gesamtmasse der gehärteten Abdichtungsmasse, sowie mindestens ein gehärtetes Epoxidharz B) umfasst.

Bevorzugte Weiterbildungen der Wasserdampfsperrschicht sind in den Unteransprüchen 15 bis 20 angegeben. Zur Vermeidung von Wiederholungen wird auf die Ausführungen hei der verwendeten Abdichtungsmasse entsprechend verwiesen.

Gemäß einer erfindungsgemäßen Weiterbildung enthält die Wasserdampfsperrschicht kein Vlies, Gewebe und/oder Gewirke. Die erfindungsgemäße Wasserdampfsperrschicht weist überraschenderweise hervorragende mechanische Eigenschaften auf, die ein Begehen bzw. auch punktuelles Belasten der Wasserdampf-Sperrschicht erlauben, ohne dass die Wasserdampfsperrschicht hierdurch beschädigt wird. Somit kann auf das aufwendige Einarbeiten bzw. Einbringen eines Verstärkungsmaterials, beispielsweise in Form von Fasern oder Vlies, Gewebe und/oder Gewirke verzichtet werden, ohne eine Qualitätseinbuße hinnehmen zu müssen.

Äußerst vorteilhaft weist das aufgebrachte Abdichtungsmaterial bzw. die noch nicht ausgehärtete Wasserdampfsperrschicht ein sehr gutes Haftvermögen auf, so dass etwaiges Wärmedämmmaterial durch Kontaktierung mit der noch nicht ausgehärteten Wasserdampfsperrschicht vollflächig verklebt werden kann.

Die erfindungsgemäß zu verwendende Abdichtungsmasse bzw. die noch ausgehärtete Wasserdampfsperrschicht weist äußerst vorteilhaft ein gutes Haftungsvermögen zu anderen Materialien wie Steinwolle, Glasfasern, Schaumglas, Holzfasern, Polyurethanschaumstoffen, Polystyrol, etc. auf.

Selbstverständlich ist es aber auch möglich, nach Aushärtung der verwendeten Abdichtungsmasse, d. h. nach Ausbildung der Wasserdampfsperrschicht, eine Verklebung des Wärmedämmmaterials mit der ausgebildeten Wasserdampfsperrschicht in einem zweiten Arbeitsgang durchzuführen. Zur Verklebung kann entweder erneut die erfindungsgemäß zu verwendende Abdichtungsmasse aufgebracht oder aber auch eine andere geeignete Klebe- oder Haftmasse verwendet werden.

Die der Erfindung zugrunde liegende Aufgabe wird des weiteren durch einen Mehrschichtaufbau gelöst, wobei der Mehrschichtaufbau eine Grundierungsschicht, eine Wasserdampfsperrschicht gemäß einem der Ansprüche 14 bis 20 sowie eine Haftschicht umfasst. Die Haftschicht kann dabei, wie vorstehend beschrieben, materialidentisch zur Wasserdampfsperrschicht sein.

Eine Grundierung kann vorteilhaft sein, um die Haftung der Wasserdampf-sperrschicht an dem abzudichtenden Gebäudeteil zu erhöhen. Die Grundierung kann dabei als Haftbrücke wirken. Wenn die Abdichtungsmasse auch als Grundierungsmasse verwendet wird, wird vorzugsweise eine möglichst niedrige Viskosität und ein hohes Penetrationsvermögen, beispielsweise durch Verminderung des Anteils an Füllstoffen, eingestellt. Eine Grundierung kann sich bei Substraten aus Beton als vorteilhaft erweisen.

Die der Erfindung zugrunde liegende Aufgabe wird ferner durch ein Flächengebilde gelöst, wobei das Flächengebilde eine Wasserdampfsperrschicht gemäß einem der Ansprüche 14 bis 20 oder einen Mehrschichtaufbau gemäß Anspruch 21 aufweist. Das Flächengebilde ist gemäß einer bevorzugten Weiterbildung der Erfindung ein Gebäudeelement, vorzugsweise eine Decke, eine Wand oder ein Dach, insbesondere ein Flachdach oder Pultdach.

Die Gebäudeelemente können bereits mit einer Wasserdampfsperrschicht oder einem Mehrschichtaufbau, der eine Wasserdampfsperrschicht enthält, versehen sein. Zusätzlich können die Gebäudeelemente auch bereits auf der dem Gebäudeelement abgewandten Seite der Wasserdampfsperrschicht ein Wärmedämmmaterial aufweisen.

Diese Flächengebilde eignen sich hervorragend für die Verwendung bei Fertighaus-Herstellern, bei denen die einzelnen Gebäudeelemente vorgefertigt und nachfolgend innerhalb von wenigen Stunden an Ort und Stelle zusammengebaut werden.

Die Erfindung wird nachfolgend anhand von Beispielen näher erläutert, ohne diese hierdurch in irgendeiner Form zu beschränken.

### Beispiel 1 (erfindungsgemäß)

Herstellung einer n 2-Komponenten-Reaktionsharzmasse zur erfindungsgemäßen Verwendung: Ein 2-Komponenten-Beschichtungssystem wurde formuliert enthaltend:

| | |
|---|---|
| 400 g | EPS 70, aromatisches epoxyfunktionelles Polysulfidharz der Fa. Thioplast Chemicals GmbH & Co. KG, Greiz, Deutschland mit einem Epoxidäquivalentgewicht von 310 und einem Gehalt an unmodifiziertem Epoxydharz von 28 %. |
| 200 g | EPS 25, aliphatisches epoxyfunktionelles Polysulfidharz der Fa. Thioplast Chemicals GmbH & Co. KG, Greiz, Deutschland mit einem Epoxidäquivalentgewicht von 640 ohne Anteile von unmodifiziertem Epoxydharz |
| 44 g | Polypox R24 (C12-C14 Glycidether der Fa. UPPC AG (Mietringen Baltringen, Deutschland) mit einem Epoxidäquivalentgewicht von 290 |
| 86 g | Titandioxid-Weisspigment |
| 84 g | Talkum, Microtalk AT 1 |
| 60 g | Martinal ON 310 (Aluminiumhydroxid der Fa. Martinswerk GmbH, Bergheim, Deutschland) |
| 120 g | Martinal ON 320 (Aluminiumhydroxid der Fa. Martinswerk GmbH, Bergheim, Deutschland) |
| 3 g | Kieselsäure Cab-O-Sil TS 720 (Fa. Cabot GmbH, Hanau, Deutschland) |
| 5 g | Disparlon 6500 (Dispergierhilfsmittel der Fa. Erbslöh KG, Krefeld, Deutschland) |
| 5 g | Entschäumer Byk A 501 (Byk-Chemie, Wesel, Deutschland) |

Die Mischung der Epoxidharze wurde in einem handelsüblichen Dissolver vorgelegt und sukzessive mit den weiteren Komponenten innig vermischt.

Zur Aushärtung wurden 195 g Aradur 2963 (handelsüblicher Epoxidharzhärter auf Basis aliphatischer Amine der Fa. Huntsman LLC, Belgien) zugesetzt. Nach inniger Vermischung erhielt man eine gebrauchsfertige 2-Komponenten-Reaktionsharzmasse mit einer Verarbeitungszeit von ca. 40 Minuten.

Die wasserdampfdiffusionsäquivalente Luftschichtdicke S_{d}, ermittelt an 2,00 +/-5% mm dicken Platten gemäß DIN EN 1931 betrug 64 entsprechend einer Wasserdampfdiffusionswiderstandszahl µ von 32000.

### Beispiel 2 (erfindungsgemäß)

Herstellung einer 2-Komponenten-Reaktionsharzmasse zur erfindungsgemäßen Verwendung: Ein 2-Komponenten-Beschichtungssystem wurde formuliert enthaltend:

| | |
|---|---|
| 40 g | EPS 25, aliphatisches epoxyfunktionelles Polysulfidharz der Fa. Thioplast Chemicals GmbH & Co. KG, Greiz, Deutschland mit einem Epoxidäquivalentgewicht von 640 ohne Anteil von unmodifiziertem Epoxydharz |

| | |
|---|---|
| 165 g | EPS 600, aromatisches epoxyfunktionelles Polysulfidharz der Fa. Thioplast Chemicals GmbH & Co. KG, Greiz, Deutschland mit einem Epoxidäquivalentgewicht von 185 und einem Gehalt an unmodifiziertem Epoxydharz von 35 %. |
| 20 g | Epilox A19-00, Standard Epoxidharz der Fa. Leuna Harze GmbH (Leuna, Deutschland)mit einem Epoxidäquivalentgewicht von 190 |
| 5 g | Polypox R24 (C12-C14 Glycidether der Fa. UPPC AG , Mietringen Baltringen, Deutschland) mit einem Epoxidäquivalentgewicht von 290 |
| 86 g | Titandioxid-Weisspigment |
| 45 g | Talkum, Microtalk AT 1 |
| 55 g | Martinal ON 310 (Aluminiumhydroxid der Fa. Martinswerk GmbH, Bergheim, Deutschland) |
| 10g | Martinal ON 320 (Aluminiumhydroxid der Fa. Martinswerk GmbH, Bergheim, Deutschland) |
| 1 g | Kieselsäure Cab-O-Sil TS 720 (Fa. Cabot GmbH, Hanau, Deutschland) |
| 2 g | Ricinusöl |
| 1 g | Entschäumer Byk A 501 (Byk-Chemie, Wesel, Deutschland) |

Die Mischung der Epoxidharze wurde in einem handelsüblichen Dissolver vorgelegt und sukzessive mit den weiteren Komponenten innig vermischt.

Zur Aushärtung wurden 67 g Aradur 450 BD (handelsüblicher Epoxidharzhärter auf Polyamidoamin-Basis der Fa. Huntsman LLC, Belgien) zugesetzt. Nach inniger Vermischung erhielt man eine gebrauchsfertige 2-Komponenten-Reaktionsharzmasse mit einer Verarbeitungszeit von ca. 50 Minuten.

Die wasserdampfdiffusionsäquivalente Luftschichtdicke S_{d}, ermittelt an 2,00 +/-5% mm dicken Platten gemäß DIN EN 1931 betrug 105 entsprechend einer Wasserdampfdiffusionswiderstandszahl µ von 52500.

### Beispiel 3 (Vergleichsbeispiel)

Herstellung einer 2-Komponenten Reaktionsharzmasse auf Basis von Epoxidharzen Ein elastisches Beschichtungssystem auf Basis eines elastifizierten Epoxidharzes wurde ohne Zusatz epoxyfunktioneller Polysulfidharze formuliert enthaltend:

| | |
|---|---|
| 600 g | Polypox 403 (reaktivverdünntes, monofunktionelles Epoxidharz der Fa. UPPC AG (Mietringen-Baltringen, Deutschland) mit einem Epoxidäquivalentgewicht von 193 |
| 69 g | Titandioxid-Weißpigment |
| 18 g | Eisenoxid-Schwarzpigment |
| 106 g | Schwerspat EWO |
| 60 g | Martinal ON 310 (Aluminiumhydroxyd der Fa. Martinswerk, Bergheim, Deutschland) |
| 120 g | Martinal ON 320 (Aluminiumhydroxyd der Fa. Martinswerk, Bergheim, Deutschland) |
| 30 g | Kieselsäure Cab-O-Sil TS 720 (Fa. Cabot GmbH Hanua Deutschland) |
| 23 g | Disparlon 6500 (Dispergierhilfsmittel der Fa. Erbslöh KG, Krefeld, Deutschland) |
| 30 g | Entschäumer Byk A 501 (Byk-Chemie, Wesel, Deutschland) |

Das Epoxidharz wurde in einem handelsüblichen Dissolver vorgelegt und sukzessive mit den weiteren Komponenten innig vermischt.

Zur Aushärtung wurden 340 g Aradur 2964 (cycloaliphatischer Polyaminhärter der Fa. Huntsman LLC, Belgien mit einem H-aktiv-Äquivalentgewicht von 92) zugesetzt. Nach inniger Vermischung erhielt man eine gebrauchsfertige 2-Komponenten-Reaktionsharzmasse.

Die wasserdampfdiffusionsäquivalente Luftschichtdicke s_{d}, ermittelt an 2,00 +/-5% mm dicken Platten gemäß DIN EN 1931 betrug 5,1, entsprechend einer Wasserdampfdiffusionswiderstandszahl µ von 2550.

### Beispiel 4 (Vergleichsbeispiel)

Herstellung einer 2-Komponenten Reaktionsharzmasse auf Basis von modifizierten Polyurethanen gemäß US-Patentanmeldung 2003/0192283 A1

Es wurde eine 2-Komponenten Reaktionsharzmasse auf Basis aromatischer Polyurethane gemäß US-Patentanmeldung 2003/0192283 A1 Beispiel 1 hergestellt.

Die wasserdampfdiffusionsäquivalente Luftschichtdicke s_{d}, ermittelt an 2,00 +/-5% mm dicken Platten gemäß DIN EN 1931 beträgt 7,0 entsprechend einer Wasserdampfdiffusionswiderstandszahl µ von 3500.

Die wasserdampfdiffusionsäquivalente Luftschichtdicke berechnet sich aus der materialspezifischen Wasserdampf-Diffusionswiderstandszahl µ multipliziert mit der Dicke d in [m] der Wasserdampfsperrschicht.

Ab einem s_{d}-Wert von größer als 15000 kann bei Applikation in Schichtdicken von 2-4mm eine ausreichende Wasserdampfsperrschicht erhalten werden.
Die gemäß den Beispielen 3 und 4 (Vergleichsbeispiele) hergestellten Beschichtungen wiesen eine absolut ungenügende Wasserdampfdiffusionswiderstandszahl µ von weniger als 15000 auf.

## Patentansprüche

**1.** Verwendung einer Abdichtungsmasse zur Herstellung einer Wasserdampfsperrschicht, umfassend
A) mindestens ein epoxyfunktionelles Polysulfidharz,
B) mindestens ein Epoxydharz,
C) mindestens einen Härter, welcher bei Umgebungstemperatur reaktiv gegenüber Epoxydgruppen ist,
D) Füllstoffe, Hilfs- und/oder Zusatzmittel
wobei der Anteil an epoxyfunktionellem Polysulfid-Harz A) in einem Bereich von 25 - 80 Masse-%, bezogen auf die Gesamtmasse der Abdichtungsmasse, liegt.

**2.** Verwendung gemäß Anspruch 1,
**dadurch gekennzeichnet,**
**dass** das epoxyfunktionelle Polysulfidharz A) ein aliphatisches und/oder aromatisches epoxyfunktionelles Polysulfidharz ist.

**3.** Verwendung nach Anspruch 1 oder 2,
**dadurch gekennzeichnet,**
**dass** die Abdichtungsmasse als Komponente B) wenigstens ein aromatisches Epoxidharz enthält.

**4.** Verwendung gemäß einem der vorhergehenden Ansprüche,
**dadurch gekennzeichnet,**
**dass** der Anteil an epoxyfunktionellem Polysulfidharz A) in einem Bereich von 30 bis 75 Masse-%, vorzugsweise von 35 bis 60 Masse-%, jeweils bezogen auf die Gesamtmasse der Abdichtungsmasse, liegt.

**5.** Verwendung gemäß einem der vorhergehenden Ansprüche,
**dadurch gekennzeichnet,**
**dass** der Anteil an Epoxidharz B) in einem Bereich von 5 bis 30 Masse-%, bevorzugt von 8 bis 25 Masse-%, weiter vorzugsweise von 10 bis 20 Masse-%, jeweils bezogen auf die Gesumtmasse der Abdichtungsmasse, liegt.

**6.** Verwendung gemäß einem der vorhergehenden Ansprüche,
**dadurch gekennzeichnet,**
**dass** die Abdichtungsmasse als Komponente D) Füllstoffe sowie optional weitere Additive in einem Bereich von 10 bis 50 Masse-%, bezogen auf die Gesamtmasse der Abdichtungsmasse enthält

**7.** Verwendung gemäß einem der vorhergehenden Ansprüche,
**dadurch gekennzeichnet,**
**dass** das Molekulargewicht des epoxyfunktionellen Polysulfidharzes A) in einem Bereich von 150 bis 1000 g/mol, vorzugsweise von 200 bis 800 g/mol, weiter vorzugsweise von 300 bis 600 g/mol, liegt.

**8.** Verwendung gemäß einem der vorhergehenden Ansprüche,
**dadurch gekennzeichnet,**
**dass** das Molekulargewicht des Epoxidharzes B) in einem Bereich von 150 bis 1000 g/mol, vorzugsweise von 200 bis 700 g/mol, weiter vorzugsweise von 300 bis 500 g/mol, liegt.

**9.** Verwendung gemäß einem der vorhergehenden Ansprüche,
**dadurch gekennzeichnet,**
**dass** die Abdichtungsmasse weniger als 10 Masse-%, vorzugsweise weniger als 5 Masse-%, weiter bevorzugt weniger als 1 Masse-%, organisches Lösungsmittel, jeweils bezogen auf die Gesamtmasse der Abdichtungsmasse, enthält.

**10.** Verwendung gemäß einem der vorhergehenden Ansprüche,
**dadurch gekennzeichnet,**
**dass** die Abdichtungsmasse in einem Temperaturenbereich von 10 bis 30°C gießfähig oder fließfähig ist.

**12.** Verwendung gemäß einem der vorhergehenden Ansprüche,
**dadurch gekennzeichnet,**
**dass** die Abdichtungsmasse bei einer Temperatur von 23°C eine rotationsviskosimetrisch bestimmbare Viskosität im Bereich von 2.000 mPas bis 25.000 mPas, vorzugsweise von 3.000 mPas bis 20.000 mPas, weiter vorzugsweise von 5.000 mPas bis 15.000 mPas, aufweist.

**13.** Verwendung gemäß einem der vorhergehenden Ansprüche,
**dadurch gekennzeichnet,**
**dass** die Abdichtungsmasse nach Aushärtung eine Wasserdampf-Diffusionswiderstandszahl µ von wenigstens 15000 aufweist.

**14.** Wasserdampfsperrschicht,
**dadurch gekennzeichnet,**
**dass** die Dicke der Wasserdampfsperrschicht in einem Bereich von 1 bis 5 mm, vorzugsweise von 2 bis 4 mm, weiter bevorzugt von 2,5 bis 3 mm, liegt und mindestens ein gehärtetes epoxyfunktionelles Polysulfidharz A) in einem Bereich von 25 bis 80 Masse-%, bezogen auf die Gesamtmasse der gehärteten Abdichtungsmasse, sowie mindestens ein gehärtetes Epoxidharz B) umfaßt.

**15.** Wasserdampfsperrschicht gemäß Anspruch 14,
**dadurch gekennzeichnet,**
**dass** das gehärtete epoxyfunktionelle Polysulfidharz A) ein aliphatisches und/oder aromatisches epoxyfunktionelles Polysulfidharz ist.

**16.** Wasserdampfsperrschicht gemäß Anspruch 14 oder 15,
**dadurch gekennzeichnet,**
**dass** die gehärtete Abdichtungsmasse als Komponente B) ein aromatisches Epoxidharz enthält.

**17.** Wasserdampfsperrschicht gemäß einem der vorhergehenden Ansprüche 14 bis 16,
**dadurch gekennzeichnet,**
**dass** der Anteil an gehärtetem epoxyfunktionellen Polysulfidharz A) in einem Bereich von 30 bis 75 Masse-%, vorzugsweise von 35 bis 60 Masse-%, jeweils bezogen auf die Gesamtmasse der gehärteten Abdichtungsmasse, liegt.

**18.** Wasserdampfsperrschicht gemäß einem der Ansprüche 14 bis 17,
**dadurch gekennzeichnet,**
**dass** der Anteil an gehärtetem Epoxidharz B) in einem Bereich von 5 bis 30 Masse-%, bevorzugt von 8 bis 25 Masse-%, weiter vorzugsweise von 10 bis 20 Masse-%, jeweils bezogen auf die Gesamtmasse der gehärteten Abdichtungsmasse, liegt.

**19.** Wasserdampfsperrschicht gemäß einem der vorhergehenden Ansprüche 14 bis 18,
**dadurch gekennzeichnet,**
**dass** die gehärtete Abdichtungsmasse als Komponente D) Füllstoffe sowie optional weitere Additive in einem Bereich von 10 bis 50 Masse-%, bezogen auf die Gesamtmasse der Abdichtungsmasse enthält

**20.** Wasserdampfsperrschicht gemäß einem der Ansprüche 14 bis 20,
**dadurch gekennzeichnet,**
**dass** die Wasserdampfsperrschicht kein Vlies, Gewebe und/oder Gewirke enthält.

**21.** Mehrschichtaufbau,
**dadurch gekennzeichnet,**
**dass** der Mehrschichtaufbau eine Grundierungsschicht, eine Wasserdampfsperrschicht gemäß einem der Ansprüche 14 bis 20 und eine Haftschicht umfaßt.

**22.** Flächengebilde,
**dadurch gekennzeichnet,**
**dass** das Flächengebilde eine Wasserdampfsperrschicht gemäß einem der Ansprüche 14 bis 20 oder einen Mehrschichtaufbau gemäß Anspruch 21 aufweist.

**23.** Flächengebilde gemäß Anspruch 22,
**dadurch gekennzeichnet,**
**dass** das Flächengebilde ein Gebäudeelement, vorzugsweise eine Decke, eine Wand oder ein Dach, insbesondere ein Flachdach, ist.
